## Europäisches Patentamt
## European Patent Office
## Office européen des brevets

(11) Publication number: **0 172 652**
**B1**

(12) **EUROPEAN PATENT SPECIFICATION**

(45) Date of publication of patent specification: **16.05.90**

(21) Application number: **85305130.8**

(22) Date of filing: **18.07.85**

(51) Int. Cl.⁵: **A 01 G 3/08**

(54) Brushcutter kick prevention device and method.

(30) Priority: **20.07.84 US 632646**

(43) Date of publication of application:
**26.02.86 Bulletin 86/09**

(45) Publication of the grant of the patent:
**16.05.90 Bulletin 90/20**

(84) Designated Contracting States:
**AT BE DE FR GB IT SE**

(56) References cited:
**EP-A-0 098 068**
**DE-C-517 629**
**FR-A-2 291 697**
**GB-A-1 032 816**

(73) Proprietor: **McCulloch Corporation**
**P.O. Box 92180**
**Los Angeles California 90009 (US)**

(72) Inventor: **Luerken, Adolf**
**26943 Grayslake Road**
**Palos Verdes, California 90274 (US)**

(74) Representative: **Sherrard-Smith, Hugh et al**
**Appleyard, Lees & Co. 15 Clare Road**
**Halifax, HX1 2HY West Yorkshire (GB)**

## Description

### Background of the invention

Brushcutters have been known to the art for some period of time. These brushcutters are generally powered by electric motors or gasoline engines of the internal combustion type, and typically are powered by two-cycle gasoline engines. The engine drives a rotating toothed cutting blade which is suitable for the cutting of shrubbery, small limbs, brush and the like. Saplings, one inch in diameter or even larger, can be cut with such brushcutters. These brushcutters normally have a handle which is grasped by the operator, and a shaft connecting the handle to the cutting head. The engine may be located directly on top of the cutting head, or may be at the end of the shaft away from the cutting head, with a drive shaft connecting the engine with the cutting head of the brushcutter. In certain of these prior art brushcutters the brush blade may be removed from the cutting head and replaced by a weed/grass blade, generally having fewer teeth than the brush blade, or even replaced with a string trimmer head, which uses rapidly rotating links of flexible line, such as a nylon line, to cut grasses and weeds.

Contact of a brush stem, tree limb or other object with the rotating cutting blade of a brushcutter, at any portion of the blade's circumference, can cause a violent propulsion of the brushcutter in the opposite direction to the blade tip motion. However, the most dangerous type of kick of a brushcutter is a sideways or lateral kicking motion caused by contact of the front portion of the spinning blade with a solid object. Contact of either side of the spinning blade with a solid object may cause some motion either toward or away from the operator of the brushcutter, but that type of motion is generally adequately resisted by the operator so that an uncontrolled propulsion of the brushcutter rotating blade will generally not be encountered. It is the sideways propulsion of the brushcutter head which cannot be readily controlled by the operator, and thus is the most dangerous to bystanders. Because of the presence of a debris shield, which is required in a number of jurisdictions, the rear portion of the rotating blade cannot generally contact solid objects, so that the sideways propulsion of the brushcutter head is generally only caused by contact of the front portion of the rotating blade with a solid object.

Because of the length of the shaft between the handles and the cutting head of a brushcutter, brushcutter kick is normally not particularly dangerous to the operator, but can be exceedingly dangerous to a bystander within the area of travel of the cutting head during kick. This kick happens when the front of the cutting disk or blade grips or engages the ground, a sturdy branch, a cluster of twigs, a baseboard, a chain link fence or the like. In these circumstances the cutting head tends to run along the object contacted in the manner of a cogwheel train. Because of the rotational speed of the cutting head, this side motion or kick tends to be rapid and violent.

European Patent Application Number 0 098 068 discloses a portable power tool including a rotary cutter 18 which co-operates with a pair of stationary sheer blades 20 and 21. These sheer blades 20 are disposed underneath the cutter 18 and are generally planar members. Similarly in DE—C—517 629 a power saw is disclosed wherein a circular sawing means s is disposed above a guard member f, this guard member being a planar member. Both of these documents are concerned with different problems and different apparatus, compared to the present application.

According to a first aspect of the present invention there is provided a portable brushcutter comprising rotatable cutting means and a shield means arranged to prevent debris from the cutting means from being thrown back towards the operator, characterised in that the brushcutter further includes a guard located radially outwardly of what, in use, will be the cutting portion of the rotating cutting means (10, 21, 31 & 41), the guard (14, 23, 34 & 46) comprising a first guard portion disposed above a top side of the cutting means and extending beyond the circumferential front edge thereof and a second guard portion outboard the circumferential front edge of the cutting means and extending downwardly from said first guard portion, the guard being located on the far side of the axis of rotation of the cutting means from an operator, the brushcutter including two cutting areas located to either side of the guard.

Preferably, said cutting means comprises a generally planar cutting member, having cutting teeth on the circumferential edge of the member and having a top side and a bottom side and defining a swept area having a front edge and a back edge, the member being rotatable about an axis generally perpendicular to the plane of the member; the brushcutter including rotational support means having an axis and located adjacent said member for coaxially supporting said member for rotation about said member axis; a gasoline engine; elongated support means extending upwardly and backwardly from the rotational support means for supporting said rotational support means and said engine; power transmission means for transmitting rotational power to said cutting member from said gasoline engine for rotation of said member about said axis; handle means attached to said support means for manual gripping by an operator standing generally behind said back edge and including an elongated shaft extending upward and backward from the vicinity of said axis and over said back edge; wherein said shield means is disposed about the back edge of and around a minor portion of said swept area; wherein said guard is provided for reducing or preventing side kick of said brushcutter and for preventing rotation of said member when an object is forced by said member into jamming engagement with said guard, the second guard portion being provided at a location generally opposite said elongated shaft and extending downwardly from said first guard portion at least as low as the bottom side of said member and about a minor portion of the circumferential edge of said member; whereby said guard prevents edgewise contact of a portion of the front edge of said member having an angular width of about 2° to about 35°, with an object in front of said brushcutter; said guard and said shield means together disposed about no more than a minor portion of the circumferential edge of said member, and defining therebetween the two unguarded cutting member cutting areas, with a cutting area located on each side of the guard means.

Alternatively, the brushcutter may have a back and a front, wherein the rotatable cutting means is generally planar having a top side and bottom side and cutting members on the circumference thereof, said cutting means being rotatable about an axis generally perpendicular to the plane thereof, the brushcutter further comprising engine means for rotating said cutting means, and handle means extending upward and backward from the vicinity of the cutting means for manual gripping by an operator standing generally at the back of the brushcutter, wherein the shield means is disposed about a minor portion of the circumference at the back thereof and the guard means is adapted for reducing or preventing kick of said brushcutter and the guard means is disposed about a minor portion from about 2° to about 35° of the front of the cutting means; wherein said second guard portion extends downwardly at least as low as the bottom side of the cutting means for preventing edgewise contact of the front of the cutting means with an object directly in front of said brushcutter, the guard defining two unguarded cutting areas of the cutting means on each side of the guard; and wherein said guard is of sturdy construction for preventing rotation of the cutting means when an object is forced by the cutting means into jamming engagement with the guard.

Preferably, said guard and said shield means together are disposed around no more than a minor portion of the circumference of said cutting member. Preferably said guard is no larger than said shield means. Said guard may be integrally formed or integral with said shield means. The guard may be fastened to said shield means.

Preferably said handle means comprises an elongated shaft and gripping means for manual gripping by said operator located on said shaft. Preferably said guard is symmetrical about an axis which is located on the cutting means directly opposite said elongated shaft. Preferably no portion of said guard is disposed underneath said bottom side.

According to a second aspect of the present invention there is provided a method of cutting brush, using a brushcutter according to the first aspect.

In use, Brushcutter kick may be reduced or prevented by the provision of a device which foils the cogwheel effect described above. In operation, the kick preventer device may cause branches or other objects to be jammed between the cutting blade and the kick preventer, in which event the workload will become too heavy and the cutting wheel will slow down and finally stop by itself because the drive clutch will be disengaged at idle speed. This sequence of events takes a fair of amount of time, and should not be confused with a chain saw chain brake, which acts almost instantaneously, but does serve to reduce the brushcutter kick.

The kick preventer may extend in a plane which is at least approximately parallel to the plane of the cutting blade, and is located above the cutting blade by a distance of at least 1/4 inch (0.006 metres). Normally, the kick preventer will be no more than 2 inches (0.049 metres) above the cutting blade, so as to prevent ready access of objects thereinbetween. The front portion of the kick preventer will be out in front of the cutting blade a distance of at least 1/4 inch (0.006 metres), and preferably a distance of about 1/2 inch (0.012 metres). Normally, the brushcutter will not extend a distance greater than 2 inches (0.049 metres) out in front of the cutting blade.

Brief description of the drawings

The invention will be more readily understood from reference to the accompanying drawings, which are given by way of example, wherein

Figure 1 is an overhead view of the brushcutter of the present invention;

Figure 2 is a side view of the cutter head of the brushcutter of the present invention;

Figure 3 is an enlarged overhead view of the cutting head of the brushcutter of the present invention;

Figure 4 is a perspective view of the bottom portion of the brushcutter head of the present invention;

Figure 5 is a side view of another cutting head of a brushcutter of the present invention; and

Figure 6 is a side view of yet another embodiment of the cutter head of the brushcutter of the present invention.

Figure 7 is a perspective view of the cutter head of yet another embodiment of the brush cutter of the present invention.

Detailed description of the invention

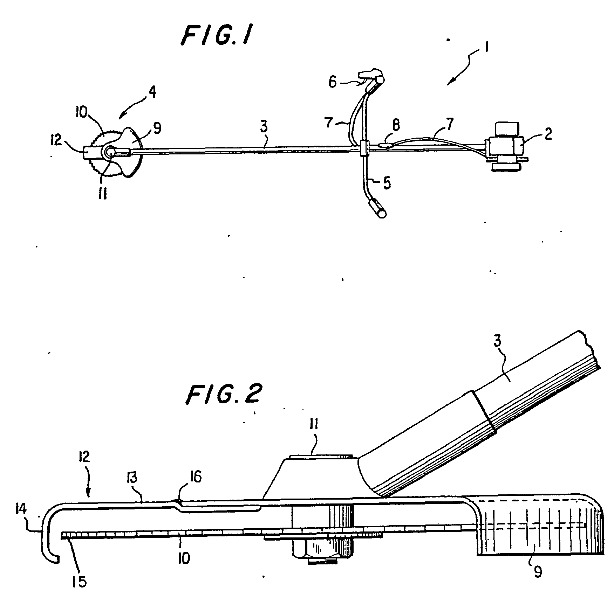

The brushcutter 1 of Figure 1 includes a gasoline powered internal combustion engine 2, and a straight shaft housing 3 which contains a drive shaft (not shown) transmitting power between engine 2 and cutting head 4. Handle 5 is mounted on housing 3, with throttle 6 mounted on one end of handle 5. Throttle 6 controls the speed of engine 2 through throttle cable 7. A safety shoulder harness (not shown) can be attached to ring 8 mounted on housing 3.

The cutting head 4 includes a debris shield 9 which protects the user of the brushcutter from being struck by cut brush or other debris, as well as any other material picked up by the brushcutter, including rocks, dirt, nails and the like. The debris shield 9 is mounted between the operator of the brushcutter and rotating toothed blade 10. Sealed gear box 11 transmits rotational power from the drive shaft to the rotating blade 10. Kick preventer 12 is mounted on the opposite side of the cutter head 4 from debris shield 9. As will be more readily seen in Figure 2, kick preventer 12 includes a portion 13 which in operation of the brushcutter is generally maintained in a horizontal position which is at least approximately co-planar with blade 10. At the outboard end of section 13 is a dependent section 14, serving to prevent contact of the front edge 15 of blade 10 with an object in front of the brushcutter. Kick preventer 12 is welded by weld 16 to the front portion of debris shield 9.

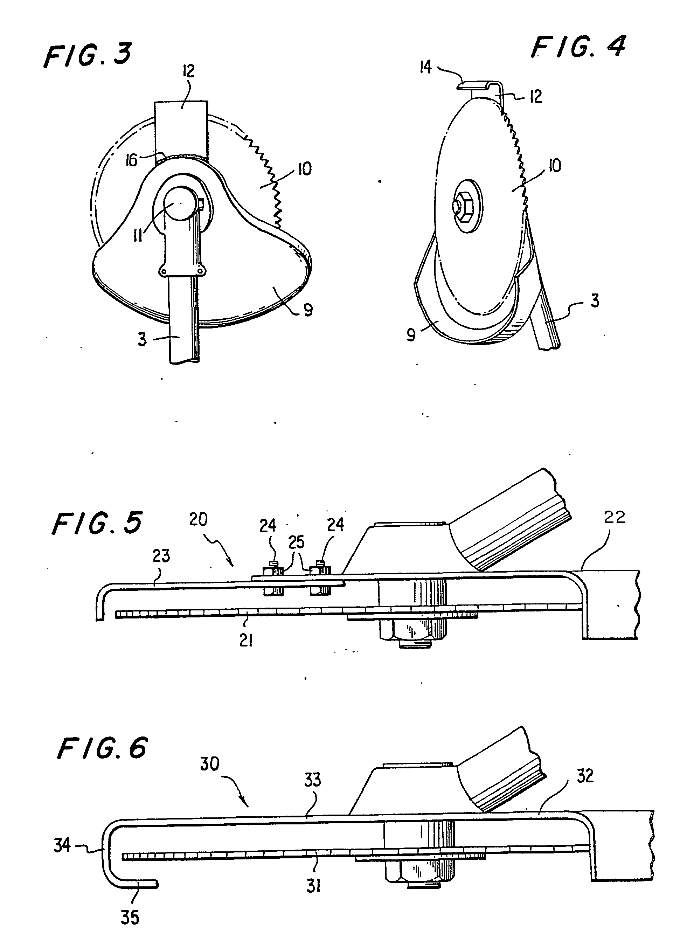

As shown in Figures 5 and 6, the kick preventer of the present invention may be modified in several aspects. Instead of being welded to the cutting head 4, and specifically the debris shield 9 thereof, the kick preventer can be bolted (Figure 5) to debris shield 22 or formed integrally (Figure 6), such as by a single stamping or casting operation, with the debris shield 32.

In Figure 5, cutting head 20 includes a blade 21 and a debris shield 22. Kick preventer 23 is bolted onto debris shield 22 by bolts 24 and nuts 25. The front portion 26 of kick preventer 23 extends only to the level of the bottom surface of cutting blade 21.

In Figure 6, cutting head 30 includes a blade 31 having a debris shield 32 and a kick preventer 33 formed integrally therewith. Kick preventer 33 includes a front portion 34 extending below the bottom edge of blade 31, and a bottom portion 35 extending inwardly beneath blade 31.

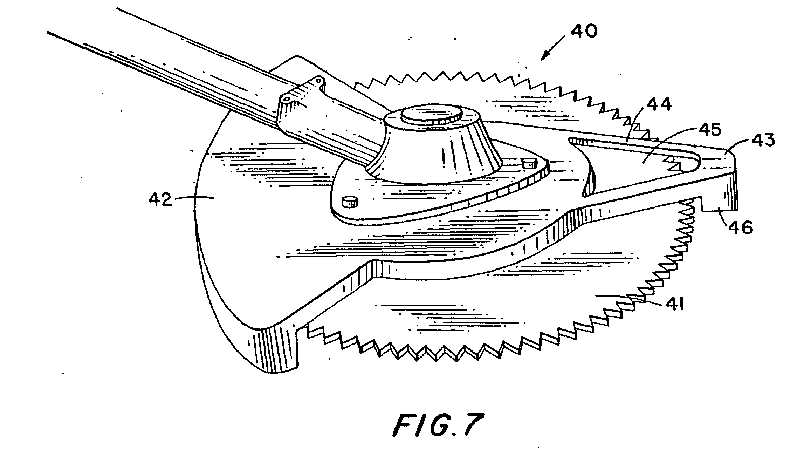

In Figure 7, cutting head 40 includes a blade 41 having a debris shield 42 and a kick preventer 43 formed integrally therewith. Kick preventer 43 includes a first, generally horizontal in operation, portion 44 having a dimpled portion 45 therein for strengthening purposes, and a second, front portion 46 which extends to approximately the bottom of the blade 41.

Kick preventer 43 is tapered toward the front thereof so as to be able to have the strength to resist side thrust thereon, yet be narrow enough at the front portion so as to have minimum prevention with the cutting ability of blade 41.

As will be readily appreciated, the particular source of driving power for the cutting blade of the brushcutter of the present invention is not critical, although a gasoline powered internal combustion engine is preferred, especially a two-stroke gasoline powered engine. An electric motor could be utilized, or even hydraulic or compressed air motive power could be utilized, without departing from the spirit of the present invention.

The brushcutter illustrated in Figure 1 utilizes a power source which is spaced apart from the cutting head, and this construction is preferred. However, it is known in the art to have a power source, such as a gasoline motor, mounted directly over the cutting blade, and such an arrangement is acceptable with the kick preventer of the present invention. The cutting blade may be mounted directly on the motor shaft, or a drive shaft, which may be rigid and straight or flexible and angled, could be utilized.

For brushcutters with metal blades current U.S. Government regulations require that the debris shield extend over an arc of the cutting blade of at least 135°C. Smaller sizes may be permitted in other countries, or government regulations may change in the United States, but normally a debris shield of less than 35° will not be utilized as not providing an adequate area for operator protection. It is strongly preferred that the debris shield be no larger than 180°, as otherwise too great an area of the cutting blade will be blocked and thus unusable for cutting purposes, and larger sizes tend to be unduly heavy. Preferably the debris shield extends over an arc of 90° to 150°C, more preferably 120° to 140°.

On the other hand, the kick preventer of the present invention can be of any minimum width and still function to effectively reduce brushcutter kick if of sufficient strength to withstand substantial deflection when an object is jammed between the cutting blade and the kick preventer. That is, even with a kick preventer covering a blade arc of only one or two degrees, if the kick preventer is of sufficient strength at least smaller branches which are firmly enganged by the cutting blade and swept toward the kick preventer, in relative motion of the branch and the brushcutter in the kicking mode, will be jammed into the area between the cutting blade and the kick preventer, thereby reducing or preventing dangerous kick of the brushcutter of the present invention. If a branch or other object first contacts that portion of the blade rotating away from the kick preventer, and relative motion occurs between the branch or other object and the cutting head, then the branch will travel around with the blade until jammed between the cutting blade and the debris shield. In practical terms, the kick preventer will normally cover at least 1 or 2° of an arc of the cutting blade, and preferably about 5° to 15°, and more preferably about 8°. To prevent undue interference with the cutting ability of the brushcutter of the present invention, the kick preventer will normally cover no more than 35° of the cutting blade. In any event, the total area of coverage of the cutting blade circumference by the debris shield and the kick preventer combined is no more than 200°, preferably less than 160°. Normally, both the kick preventer and the debris shield will be mounted approximately symmetrically with respect to a diameter of the blade extending in the general direction of the operator of the brushcutter, although a symmetrical construction could certainly be used if desired.

The invention will now be definsd in the following claims, but it is to be appreciated that the invention may reside in any combination of these claims or in any combination of any part of these claims.

## Claims

1. A portable brushcutter comprising rotatable cutting means and a shield means arranged to prevent debris from the cutting means from being thrown back towards the operator, characterised in that the brushcutter further includes a guard located radially outwardly of what, in use, will be the cutting portion of the rotating cutting means (10, 21, 31 & 41), the guard (14, 23, 34 & 46) comprising a first guard portion disposed above a top side of the cutting means and extending beyond the circumferential front edge thereof and a second guard portion outboard the circumferential front edge of the cutting means and extending downwardly from said first guard portion, the guard being located on the far side of the axis of rotation of the cutting means from an operator, the brushcutter including two cutting areas located to either side of the guard.

2. A brushcutter according to Claim 1, wherein said cutting means comprises a generally planar cutting member, having cutting teeth on the circumferential edge of the member and having a top side and a bottom side and defining a swept area having a front edge and a back edge, the member being rotatable about an axis generally perpendicular to the plane of the member; the brushcutter including rotational support means having an axis and located adjacent said member for coaxially supporting said member for rotation about said member axis; a gasoline engine; elongated support means extending upwardly and backwardly from the rotational support means for supporting said rotational support means and said engine; power transmission means for transmitting rotational power to said cutting member from said gasoline engine for rotation of said member about said axis; handle means attached to said support means for manual gripping by an operator standing generally behind said back edge and including an elongated shaft extending upward and backward from the vicinity of said axis and over said back edge; wherein said shield means is disposed about the back edge of and around a minor portion of said swept area; wherein said guard is provided for reducing or preventing side kick of said brushcutter and for preventing rotation of said member when an object is forced by said member into jamming engagement with said guard, the second guard portion being provided at a location generally opposite said elongated shaft and extending downwardly from said first guard portion at least as low as the bottom side of said member and about a minor portion of the circumferential edge of said member; whereby said guard prevents edgewise contact of a portion of the front edge of said member having an angular width of about 2° to about 35°, with an object in front of said brushcutter; said guard and said shield means together disposed about no more than a minor portion of the circumferential edge of said member, and defining therebetween the two unguarded cutting member cutting areas, with a cutting area located on each side of the guard means.

3. A brushcutter according to Claim 1 having a back and a front, wherein the rotatable cutting means is generally planar having a top side and bottom side and cutting members on the circumference thereof, said cutting means being rotatable about an axis generally perpendicular to the plane thereof, the brushcutter further comprising engine means for rotating said cutting means, and handle means extending upward and backward from the vicinity of the cutting means for manual gripping by an operator standing generally at the back of the brushcutter, wherein the shield means is disposed about a minor portion of the circumference at the back thereof and the guard means is adapted for reducing or preventing kick of said brushcutter and the guard means is disposed about a minor portion from about 2° to about 35° of the front of the cutting means; and

wherein said second guard portion extends downwardly at least as low as the bottom side of the cutting means for preventing edgewise contact of the front of the cutting means with an object directly in front of said brushcutter, the guard defining two unguarded cutting areas of the cutting means as each side of the guard;

wherein said guard is of sturdy construction for preventing rotation of the cutting means when an object is forced by the cutting means into jamming engagement with the guard.

4. A brushcutter according to Claim 1, wherein said guard and said shield means together are disposed around no more than a minor portion of the circumference of said cutting member.

5. A brushcutter according to any of the preceding Claims, wherein said guard is no larger than said shield means.

6. A brushcutter according to any of the preceding Claims, wherein said guard is integrally formed or integral with said shield means.

7. A brushcutter according to any of Claims 1 to 5, wherein said guard is fastened to said shield means.

8. A brushcutter according to Claim 2 and Claims 4 to 7, wherein said handle means comprises an elongated shaft and gripping means for manual gripping by said operator are located on said shaft.

9. A brushcutter according to any of Claims 2 to 8, wherein said guard is symmetrical about an axis which is located on the cutting means directly opposite said elongated shaft.

10. A brushcutter according to any of the preceding Claims, wherein no portion of said guard is disposed underneath said bottom side.

11. A method of cutting brush, using a brushcutter according to any of the preceding Claims.

## Patentansprüche

1. Transportables Unterholzschneidegerät, das eine drehbare Schneideeinrichtung und eine Abschirmeinrichtung umfaßt, die es verhindert, daß Trümmer von der Schneideeinrichtung zurück zum Betreiber gezogen werden, dadurch gekennzeichnet, daß das Unterholzschneidegerät weiterhin einen Schutz umfaßt, der radial außerhalb dessen angeordnet ist, das bei Verwendung der schneidende Teil der rotierenden Schneideeinrichtung (10, 21, 31 und 41) ist, wobei der Schutz (14, 23, 34 und 46) einen ersten Schutzabschnitt, der oberhalb der Oberseite der Schneideeinrichtung angeordnet ist, und sich über ihre vordere Umfangskante hinaus erstreckt, und einen zweiten Schutzabschnitt außerhalb der vorderen Umfangskante der Schneideeinrichtung umfaßt, der sich vom ersten Schutzabschnitt nach unten erstreckt, wobei dieser Schutz auf der vom Betreiber entfernten Seite der Drehachse der Schneideeinrichtung angeordnet ist, das Unterholzschneidegerät zwei auf jeder Seite des Schutzes angeordnete Schnittbereiche umfaßt.

2. Unterholzschneidegerät nach Anspruch 1, worin die Schneideeinrichtung ein im allgemeinen ebenes Schneideteil mit Schneidezähnen auf der Umfangskante des Teiles und mit einer Oberseite und einer Unterseite umfaßt, die eine bestrichene Fläche mit einer Vorderkante und einer Hinterkante definieren, wobei das Teil um eine Achse drehbar ist, die im allgemeinen senkrecht zur Ebene des Teiles ist; das Unterholzschneidegerät eine drehende Stützeinrichtung, die eine Achse aufweist und neben dem Teil zum koaxialen Halt des Teiles zur Drehung um diese Teilachse angeordnet ist; einen Benzinmotor; verlängerte Halteeinrichtungen, die sich von der drehbaren Stützeinrichtung nach oben und nach hinten erstrecken, um die drehbare Stützeinrichtung und den Motor zu halten; eine Kraftübertragungseinrichtung zur Übertragung der Drehkraft vom Benzinmotor auf das Schneideteil, um dieses Teil um die Achse zu drehen; eine Griffeinrichtung umfaßt, die an die Stützeinrichtung befestigt ist, damit der im allgemeinen hinter der Hinterkante stehende Betreiber manuell zugreifen kann, die einen verlängerten Schaft umfaßt, der sich von der Nähe der Achse und über die hintere Kante nach oben und nach hinten erstreckt, wobei die Abschirmeinrichtung über der Hinterkante eines geringen Teiles der überstrichenen Fläche und um einen geringen Teil dieser Fläche angeordnet ist; worin der Schutz zur Verringerung oder zur Verhinderung des Ausweichens des Unterholzschneidegerätes und zur Verhinderung der Rotation des Teiles vorgesehen ist, wenn ein Gegenstand durch das Teil in einen blockierenden Eingriff mit dem Schutz gedrückt wird, wobei der zweite Schutzabschnitt an einer Stelle im allgemeinen entgegengesetzt zum verlängerten Schaft vorgesehen ist und sich vom ersten Schutzabschnitt zumindest so weit nach unten wie die Unterseite dieses Teiles und über eine geringen Teil der Umfangskante dieses Teiles erstreckt, wodurch der Schutz den kantenweisen Kontakt eines Teils der Vorderkante des Teiles mit einer rechtwinkligen Breite von etwa 2° bis etwa 35° mit einem Gegenstand vor der Unterholzschneidegerät verhindert;

wobei der Schutz und die Abschirmeinrichtung gemeinsam über nicht mehr als einem geringen Teil der Umfangskante dieses Teiles angeordnet sind, und dazwischen zwei ungeschützte Schnittbereiche des Schneideteiles definieren, wobei die Schnittbereiche auf jeder Seite der Schutzeinrichtung angeordnet sind.

3. Unterholzschneidegerät nach Anspruch 1 mit einer Rückseite und einer Vorderseite, wobei die drehbare Schneideeinrichtung im allgemeinen eben ist, eine Oberseite und eine Unterseite und Schneideteile auf ihrem Umfang aufweist, wobei die Schneideeinrichtung um eine Achse drehbar ist, die im allgemeinen zu ihrer Ebene senkrecht ist, das Unterholzschneidegerät weiterhin einen Motor zur Rotation der Schneideeinrichtung und einen Griff umfaßt, der sich von der Nähe der Schneideeinrichtung nach oben und nach hinten erstreckt, damit der im allgemeinen hinter dem Unterholzschneidegerät stehende Betreiber manuell zugreifen kann, wobei die Anschirmeinrichtung an ihrer Rückseite über einen geringen Teil des Umfanges angeordnet ist und die Schutzeinrichtung so angepaßt ist, daß das Ausweichen des Unterholzschneidegerätes verringert oder verhindert wird, und die Schutzeinrichtung über einen geringen Teil von etwa 2° bis etwa 35° der Vorderseite der Schneideeinrichtung angeordnet ist; und

worin sich der zweite Schutzabschnitt zumindest so weit nach unten erstreckt wie die Unterseite der Schneideeinrichtung, um den kantenweisen Kontakt der Vorderseite der Schneideeinrichtung mit einem Gegenstand direkt vor dem Unterholzschneidegerät zu verhindern, wobei der Schutz zwei ungeschützte Schnittbereiche der Schneideeinrichtung auf jeder Seite des Schutzes definiert;

worin der Schutz eine feste Bauweise aufweist, um die Rotation der Schneideeinrichtung zu verhindern, wenn ein Gegenstand durch die Schneideeinrichtung in einen blockierenden Eingriff mit dem Schutz gedrückt wird.

4. Unterholzschneidegerät nach Anspruch 1, worin der Schutz und die Abschirmeinrichtung zusammen um nicht mehr als einem geringen Teil des Umfanges des Schneideteils angeordnet sind.

5. Unterholzschneidegerät nach einem der vorstehenden Ansprüche, worin der Schutz nicht größer als die Abschirmeinrichtung ist.

6. Unterholzschneidegerät nach einem der vorstehenden Ansprüche, worin der Schutz mit der Abschirmeinrichtung einstückig gebildet oder darin eingebaut ist.

7. Unterholzschneidegerät nach einem der Ansprüche 1 bis 5, worin der Schutz an die Abschirmeinrichtung befestigt ist.

8. Unterholzschneidegerät nach Anspruch 2 und den Ansprüchen 4 bis 7, worin die Griffeinrichtung einen verlängerten Schaft umfaßt, und auf dem Schaft Griffvorrichtungen zum manuellen Greifen durch den Betreiber angeordnet sind.

9. Unterholzschneidegerät nach einem der Ansprüche 2 bis 8, worin der Schutz um die Achse symmetrisch ist, die auf der Schneideeinrichtung direkt entgegengesetzt zum verlängerten Schaft angeordnet ist.

10. Unterholzschneidegerät nach einem der vorstehenden Ansprüche, worin kein Teil des Schutzes unterhalb der Unterseite angeordnet ist.

11. Verfahren zum Schneiden von Unterholz unter Verwendung eines Unterholzschneidegerätes nach einem der vorstehenden Ansprüche.

**Revendications**

1. Débroussailleuse portative comprenant un organe de coupe rotatif et un protecteur disposé pour empêcher les débris venant de l'organe de coupe rotatif d'être projetés vers l'arrière en direction de l'utilisateur, caractérisée en ce que cette débroussailleuse comprend en plus une garde placée en sens radial à l'extérieur de ce qui est, pendant l'utilisation, la partie coupante de l'organe de coupe rotatif (10, 21, 31 et 41), la garde (14, 23, 34 et 46) comprenant une première partie de garde disposée au-dessus d'une face supérieure de l'organe de coupe et s'étendant au-delà de la tranche circonférentielle de cet organe et une seconde partie de garde extérieure à la tranche circonférentielle de l'organe de coupe et s'étendant vers le bas à partir de la première partie de garde, la garde étant située sur le côté éloigné de l'utilisateur de l'axe de rotation de l'organe de coupe, la débroussailleuse ayant deux zones de coupe situées sur l'un et l'autre côté de la garde.

2. Débroussailleuse selon la revendication 1, dans laquelle l'organe de coupe comprend un outil de coupe plan dans l'ensemble ayant des dents de coupe sur sa tranche circonférentielle et ayant une face supérieure et une face inférieure et définissant une zone balayée ayant un bord avant et un bord arrière, l'outil étant rotatif autour d'un axe perpendiculaire à son plan, la débroussailleuse comprenant un moyen porteur rotatif ayant un axe et situé au voisinage dudit outil pour porter coaxialement ce dernier pendant sa rotation autour dudit axe; un moteur à essence; un moyen porteur allongé s'étendant vers le haut et vers le bas à partir du moyen porteur rotatif pour porter ce dernier et le moteur, un moyen de transmission de couple pour transmettre un couple de rotation audit outil de coupe à partir du moteur à essence pour la rotation de cet outil autour dudit axe; un guidon fixé audit moyen porteur pour une prise manuelle par un utilisateur se tenant debout généralement en arrière dudit bord arrière et comprenant un arbre allongé s'étendant vers le haut et vers la bas à partir du voisinage dudit axe et au-dessus dudit bord arrière, dans lequel le protecteur est disposé autour du bord arrière et autour d'une fraction mineure de la zone balayée, dans lequel la garde est disposée pour réduire ou pour empêcher la réaction brutale en sens latéral de la débroussailleuse et pour empêcher la rotation dudit outil quand un objet est forcé par cet outil à engagement de coincement avec la garde, la seconde partie de la garde étant située à un endroit opposé dans l'ensemble audit arbre allongé et s'étendant vers le bas à partir de la première partie de garde au moins aussi bas que la face inférieure de l'outil et autour d'une fraction mineure du bord circonférentiel de ce dernier, de sorte que la garde empêche tout contact par le tranche entre un objet se trouvant en avant de la débroussailleuse et une fraction de la tranche avant de l'outil ayant une extension angulaire de 2° environ à 35° environ,

cette garde et ce protecteur n'étant disposés ensemble environ sur pas plus d'une fraction mineure du bord circonférentiel de l'outil et définissant entre eux les deux zones de coupe non protégées de l'organe de coupe rotatif, avec une zone de coupe se trouvant sur chaque côté de la garde.

3. Débroussailleuse selon la revendication 1, ayant une partie arrière et une partie avant, dans laquelle l'organe de coupe rotatif est plan dans l'ensemble avec une face supérieure et une face inférieure et des éléments de coupe à sa circonférence, cet organe de coupe étant monté rotatif autour d'un axe perpendiculaire dans l'ensemble à son plan, la débroussailleuse comprenant en plus un organe moteur pour la rotation de l'organe de coupe et un moyen de préhension s'étendant vers le haut et vers le bas à partir du voisinage des éléments de coupe pour une préhension manuelle par un utilisateur se trouvant debout en général à l'arrière de la débroussailleuse, dans laquelle le protecteur est disposé autour d'une partie mineure de la circonférence à l'arrière de celle-ci et la garde est adaptée pour réduire ou empêcher la réaction brutale en sens latéral de la débroussailleuse et la garde est disposée autour d'une fraction mineure de 2° environ à 35° environ à l'avant de l'organe de coupe et

dans laquelle la seconde partie de garde s'étend vers le bas au moins aussi bas que la face inférieure de l'organe de coupe pour empêcher tout contact entre la tranche de l'avant de l'organe de coupe et un objet se trouvant directement en avant de la débroussailleuse, la garde définissant deux zones de coupe non protégées de l'organe de coupe sur chaque côté de la garde,

dans laquelle la garde est de construction robuste pour empêcher la rotation de l'organe de coupe quand un objet est forcé par ce dernier en engagement de coincement avec la garde.

4. Débroussailleuse selon la revendication 1, dans laquelle la garde et le protecteur ensemble ne sont pas disposés autour de plus d'une fraction mineure de la circonférence de l'organe de coupe.

5. Débroussailleuse selon l'une quelconque des revendications précédentes, caractérisée en ce que la garde n'est pas plus large que le protecteur.

6. Débroussailleuse selon l'une quelconque des revendications précédentes, caractérisée en ce que la garde est formée en une seule pièce ou fait partie intégrante du protecteur.

7. Débroussailleuse selon l'une quelconque des revendications 1 à 5, dans laquelle la garde est fixée au protecteur.

8. Débroussailleuse selon la revendication 2, et les revendications 4 à 7, dans laquelle le moyen de préhension comprend un arbre allongé et des poignées pour une préhension manuelle par l'opérateur sont situés sur ledit arbre.

9. Débroussailleuse selon l'une quelconque des revendications 1 à 8, dans laquelle la garde est symétrique autour d'un axe qui se trouve sur l'organe de coupe directement à l'opposé de l'arbre allongé.

10. Débroussailleuse selon l'une quelconque des revendications précédentes, dans laquelle aucune partie de la garde n'est disposée en dessous de ladite face inférieure.

11. Procédé de coupe de broussaille à l'aide d'une débroussailleuse selon l'une quelconque des revendications précédentes.

FIG.1

FIG.2

FIG. 3

FIG. 4

FIG. 5

FIG. 6

FIG.7